# EUROPÄISCHE PATENTSCHRIFT

(11) **EP 0 848 537 B1**
(45) Veröffentlichungstag und Bekanntmachung des Hinweises auf die Patenterteilung: **09.05.2001**
(21) Anmeldenummer: 96119966.8
(22) Anmeldetag: 12.12.1996
(51) Int. Cl.: H04M 17/00, G07F 7/08

(54) **Verfahren zum Aufladen einer Telefonkarte für Mobilfunkgeräte**
Method for recharging a telephone card for mobile telephones
Procédé pour recharger une carte téléphonique pour téléphones mobiles

(43) Veröffentlichungstag der Anmeldung: 17.06.1998
(73) Patentinhaber: E-Plus Mobilfunk GmbH & Co. KG, 40468 Düsseldorf (DE)
(72) Erfinder: Ergezinger, Siegfried, 40822 Mettmann (DE); Kuyper, Kirsten, 40213 Düsseldorf (DE); Döhler, Anita, 40477 Düsseldorf (DE); Kandulski, Andreas, 40479 Düsseldorf (DE); Rubbert Katharina,, 51109 Köln (DE)
(74) Vertreter: Beyer, Rudi

(56) Entgegenhaltungen:
- EP-A- 0 698 987
- WO-A-93/03571
- DE-A- 4 312 362
- DE-A- 4 412 727
- DE-A- 4 419 651
- GB-A- 2 215 897

## Beschreibung

Die Erfindung betrifft Verfahren zum Aufladen einer Telefonkarte durch Voucher für ein Mobilfunkgerät in einem Mobilfunknetz.

Es sind nicht wiederaufladbare Wegwerfkarten im Wert von zum Beispiel DM 100,-- vorbekannt, die über einen Zeitraum von drei Monaten genutzt werden können.

Anläßlich der CeBIT '95 in Hannover hat die Firma Robin Phone Oy eine D1-Prepaid Card zum einmaligen Sonderpreis (gültig vom 08.03.95 bis zum 31.03.95) von DM 118,80 bzw. DM 9,90 pro Monat angeboten. Für die vorausbezahlte Karte galten folgende Konditionen:
- Vertragslaufzeit 12 Monate
- Mindestgesprächsumsatz DM 29,90 im Monat
- Eine der folgenden Sonderdienstleistungen (Preis je DM 5,75)
   - Einzelgebührennachweis
   - GoldService 24 (Garantieverlängerung auf 24 Monate)
   - CardService (Kartenaustausch auf neueste Kartengeneration)
- Bereitstellungspauschale zur Nutzung des Telefonnetzes DM 78,20
- Zahlung der Grundgebühr für ein Jahr bei Vertragsabschluß

Einem Artikel der Mobilfunk News (12/95) zufolge bietet die Firma Umbach Funktechnik, Göttingen, und die Mobilfunkcenter Service- und Vertriebsgesellschaft mbH, Kassel, im D1-Privatkundentarif eine vorausbezahlte Karte (Prepaid Card) an. Der monatliche Grundpreis beträgt DM 23,75. Die Monatspau-schale muß der Kunde für ein Jahr im voraus bezahlen.

Die Deutsche Telekom bietet im Markt bereits die T-Card mit zwei Optionen an:
1. Vorausbezahlte Telefonkarte im Wert von z. B.: DM 25,-- oder
2. Abbuchung der über die Telefonkarte geführten Gesprächsgebühren im Nachhinein von der normalen Telekom-Rechnung oder über die Kreditkarte des Kunden.

Weder die erste noch die zweite Option stellen eine vorausbezahlte **und** wiederaufladbare Telefonkarte dar. Die T-Card stellt auch **keinen** Telefonanschluß im eigentlichen Sinn dar. Der T-Card ist **keine** eigene Telefonnummer zugeordnet. Der Kunde ist **nicht** über die T-Card erreichbar.

Die E-Plus Mobilfunk GmbH bietet seit Mai 1995 den Dienst E-Plus Sofort! an. Dies ist eine vorausbezahlte Telefonkarte, jedoch ohne Wiederauflädemöglichkeit.

Die Schweizer PTT bietet seit dem 01.10.96 den Dienst "Natel D easy" an. Es handelt sich hier um eine vorausbezahlte und wiederaufladbare Telefonkarte, jedoch erfolgt hier die Verwaltung des Guthabens auf der SIM-Karte und nicht im Netz. Die Aufladung erfolgt über Kurznachrichten, die auf der SIM-Karte ausgewertet werden.

Aus der DE 44 19 651 A1 ist ein Verfahren zur Berechnung von Gebühren für eine von einem Teilnehmer über eine Mobilstation angeforderte Verbindung in einem zellularen Mobilfunknetz vorbekannt, bei welchem in zeitlichem Zusammenhang mit dem Aufbau, dem Bestehen und der Beendigung der Verbindung Basisdaten, welche Ursprung und Ziel, Art des Dienstes, Beginn und Ende betreffen, von einer der Mobilstation jeweils zugeordneten Mobil-Vermittlungsstelle zu einer Gebührenerfassungsstelle übertragen werden. Die Gebührenerfassungsstelle fragt Teilnehmerdaten von einer für den Teilnehmer zuständigen Datenbank ab, wobei diese Teilnehmerdaten Informationen über ein Guthaben des Teilnehmers enthalten. In der Gebührenerfassungsstelle werden während der Verbindung aus den Basisdaten laufend Gebühren berechnet und von dem Guthaben subtrahiert.

Die DE 44 12 727 A1 beschäftigt sich mit der Abrechnung von Gebühren in einem Mobilfunksystem, bei dem eine Mehrzahl von Mobilstationen (MS), Basisstationen (BS) und Mobilfunk-Vermittlungsstellen (MSC) vorgesehen sind, wobei die Mobilfunk-Vermittlungsstellen (MSC) mit einem Debitzentrum (DBC) verbindbar sind. Das Debitzentrum (DBC) erhält im Rahmen einer Vorvergebührung jeweils vorgebbare Aufladungsbeträge von einem Bankinstitut (K). Bei der Inanspruchnahme von Diensten durch die Mobilstation (MS) werden diese Beträge abgebucht. Es wird vorgeschlagen, die Vorvergebührung unter Verwendung eines an sich bekannten Intelligenten Netzes (IN) durchzuführen, bei dem das Debitzentrum (DBC) als Teil einer Dienstesteuerstelle (SCP) ausgebildet ist und mit Übertragungseinrichtungen eines Geldinstituts (B, K) verbindbar ist, und bei dem die Mobilfunk-Vermittlungsstellen (MSC) die Funktionen von Dienstezugangs-Vermittlungsstellen (SSP) des Intelligenten Netzes (IN) durchführen.

Die EP 0 698 987 A2 beschäftigt sich mit einem Buchungsverfahren, bei welchem Vorauszahlungsbeträge auf das Konto eines Subscribers überweisbar sind unter Einsatz einer zentralen Buchungsstelle.

Die GB 2 215 897 A beschäftigt sich mit der Bezahlung von Telefongebühren über Kreditkarte, um dadurch die Telefonkarte "wiederaufzuladen".

Die DE 195 28 423 A1 betrifft ebenfalls ein Verfahren zur Guthabenerfassung im Fernsprechwesen, wobei zunächst ein Guthaben bei einem Credit-Vendor erworben wird, bei dem die Telefonnummer des Teilnehmers und der Betrag des Guthabens in eine einen Verschlüsselungs-Algorithmus beinhaltende Einrichtung eingegeben wird, die eine verschlüsselte Zahl ausgibt. Zur Erfassung des Guthabens in einer Funktionseinheit des Fernsprechnetzes wird ein spezieller Zugriffscode am Telefonapparat des Teilnehmers angewählt und dann die verschlüsselte Zahl eingegeben.

Die EP 0 794 651 A1 betrifft einen Bankserver, auf den Geld überwiesen werden kann, um eine Telefonkarte wieder aufzuladen und damit nutzbar zu machen. Das System blockiert sämtliche Möglichkeiten eines neuen Anrufes, wenn der Kredit im Zähler erschöpft ist. Für die Zahlungsoption durch elektronische Zahlungsanweisung erhält der Kunde einen Bankidentifizierungsauszug von seinem Bankkonto und eine unterschriebene Bankgenehmigung für die Kontobelastung durch elektronische Zahlungsanweisung. Dieser Auszug wird per Post an die Einrichtung geschickt, die den Vorausbezahlungsserver verwaltet. Durch Vereinfachung der Zahlungsvorgänge durch elektronische Zahlungsanweisung wird ein vierzifferiger Geheimcode mit dem Bankauszug des Kunden verbunden. Der Kunde gibt bei jedem Zahlungsvorgang diesen Geheimcode ein. Dieser Geheimcode wird im Vorausbezahlungsserver gespeichert.

Eine weitere Option betrifft die Zahlung durch Bankkarte. Bei jeder Zahlungsoption gibt der Kunde, wenn er von einem Telefon anruft und seine vollständige Dossiernummer eingegeben hat, die Zahlen seiner Bankkarte ein, die in der Praxis bis zu 19 Ziffern enthalten kann, gefolgt von einem Bestätigungscode. Im Falle des Rufes von einem Mobilfunktelefon aus ist die Dossiernummer nicht vom Kunden einzugeben, sondern wird vom Netz gewählt.

Aus der DE 43 12 362 A1 ist ein Mobilfunknetz mit Guthabenkonten vorbekannt, wobei eine Netzstruktur es ermöglichen soll, mittels Protokollen eine Vermittlung und eine Gebührenabrechnung durchzuführen, ohne herkömmliche Netzprotokolle verändern zu müssen.

Aus der WO 93/03571 A1 ist ein Verfahren zur Vorausbezahlung von Telefongebühren vorbekannt.

Der Erfindung liegt die Aufgabe zugrunde, ein Verfahren zum Aufladen einer Telefonkarte für ein Mobilfunkgerät in einem Mobilfunknetz zu schaffen, bei dem die Telefonkarte im Netz durch einen Voucher aufgeladen wird, wobei einerseits ein hohes Maß an Sicherheit gegen Betrug gegeben sein soll, andererseits dem Anrufer die Möglichkeit eröffnet wird, von jedem Ort und zu jedem Zeitpunkt seine Telefonkarte um einen bestimmten, flexiblen Voucher-Wertbetrag aufzuladen.

Diese Aufgabe wird durch die in dem Patentanspruch wiedergegebenen Merkmale gelöst.

Sofern "VASS" in den Anmeldungsunterlagen genannt ist, ist dies nur als Ausführungsbeispiel zu verstehen, da anstelle "VASS" eine "Diensteplattform" allgemein zur Anwendung kommen kann.

Bei der Erfindung erfolgt das Wiederaufladen der Telefonkarte für das betreffende Handy nicht an der Karte selbst, sondern z. B. an einer vorbestimmten Stelle des Mobilfunknetzes, also in diesem selbst. Auf diese Weise wird ein hohes Maß an Sicherheit gegen Betrug gegeben, da nur der Netzbetreiber Zugang zu der betreffenden Stelle seines Funknetzes hat. Außerdem wird hierdurch die Möglichkeit eröffnet, daß der Anrufer selbst von jedem Ort und zu jedem Zeitpunkt seine Telefonkarte wieder um einen bestimmten Betrag aufladen kann. Dadurch entfallen lange Wartezeiten, umständliche Wege zu Kreditinstituten oder sonstigen Stellen und das Ausfüllen von Formularen.

Besonders vorteilhaft ist es dabei, daß die Kontrolle des Wiederaufladens im VASS erfolgt.

Beim Aufladen über Voucher am PoS haben Anrufer mit einem Mobilfunkgerät die Möglichkeit, am PoS den Voucher, zum Beispiel im Wert von DM 100,-, zu erwerben. Der Voucher hat zwei Nummern: Innen die Sicherheitsnummer zum Aufladen und außen die Identifikationsnummer zur Prüfung/Legitimierung bei Problemen. Der Anrufer gibt beim Wiederaufladen bzw. beim Anruf (für den Aufladeprozeß steht die separate kostenlose Servicenummer zur Verfügung) die Sicherheitsnummer per DTMF ein. Der Wiederaufladeprozeß muß - aus Gründen der Sicherheit - vom eigenen Handy bzw. mit der eigenen SIM-Karte des Anrufers erfolgen, damit er vom System als Nutzer für eine wiederaufladbare Telefonkarte identifiziert werden kann. Nach erfolgreicher Identifikation wird die Transaktion ausgelöst, und der entsprechende Betrag auf das "Konto" des Anrufers geladen. Der Anrufer erhält eine Bestätigung. Der Betreiber des Mobilfunknetzes verkauft die Voucher an den SP und bietet ihm die Möglichkeit, seinen eigenen Preis zu machen und diesen Preis mit dem entsprechenden Tarifmodell in das System einzustellen.
1. Der Anrufer erwirbt am PoS den SP-Voucher mit einem Wert von zum Beispiel DM 100,-- für Telefonzeit (Airtime) und Dienste. Der Voucher enthält die Sicherheitsnummer und die Identifikationsnummer.
2. Zum Aufladen der Telefonkarte wählt der Anrufer von seinem Endgerät mit seiner wiederaufladbaren Telefonkarte eine die entsprechende kostenlose Servicenummer.
3. Er wählt per Menü den Punkt "Aufladung über Voucher".
4. Würde durch die aktuelle Aufladung eine Überschreitung des Guthabenlimits von zum Beispiel DM 200,-- eintreten, findet die Aufladung nicht statt. Dem Anrufer wird durch eine Ansage mitgeteilt, daß die Aufladung wegen Überschreitung des Limits nicht durchgeführt werden kann und der Voucher weiterhin gültig bleibt.
5. Tritt keine Überschreitung des Guthabens ein, informiert das System den Anrufer, daß er eine Aufladung von zum Beispiel DM 100,--machen wird.
6. Die Identifikation des Anrufers erfolgt über MSISDN.
7. Anschließend gibt der Anrufer über sein Display seines Handys die Voucher-Sicherheitsnummer ein. Nach drei erfolglosen Versuchen wird die Karte gesperrt.
8. Das System prüft die Gültigkeit der Sicherheitsnummer des Vouchers (dem Voucher ist im System ein bestimmter Wert zugeordnet). Sofern der Voucher nicht verbraucht ist, erfolgt die Aufladung.
9. Das System überträgt den Betrag auf das Konto für die wiederaufladbare Telefonkarte des Anrufers.
10. Sobald die letzte Eingabeziffer korrekt eingegeben wurde, prüft das System die Gültigkeit des Vouchers. Der Anrufer erhält eine Ansage:
   a) Ihre Aufladung war erfolgreich; Ihr Guthaben beträgt xy DM.
   b) Ihre Aufladung war nicht erfolgreich; Ihr Guthaben beträgt xy DM. oder andere Ansagen.

   Sofern der Anrufer nicht auflegt, hört er die Ansage nach dem Gespräch.
   Sofern er vorher auflegt oder keine Deckung mehr hat, hört er die Ansage bei seinem nächsten ausgehenden Telefonanruf.
11. Sofern der Aufladevorgang erfolgreich war, wird der Voucher im System als eingelöst gekennzeichnet.

Der Anrufer kann die wiederaufladbare Telefonkarte mit PIN und PUK am PoS erwerben. Die Telefonkarte ist bereits aktiviert und mit einem Geldwert geladen; der Anrufer kann sofort telefonieren. Die endgültige Aktivierung bzw. Freischaltung der Karte auf der Diensteplattform erfolgt beim ersten Gesprächsaufbau: Der Anrufer wird per Ansage gebeten, eine Geheimzahl über Tastenwahl (DTMF) einzugeben und einmal zu bestätigen. Nach erfolgreicher Eingabe bzw. Festlegung kann der Anrufer telefonieren. Ankommende Gespräche können auch vor dem ersten abgehenden Gespräch empfangen werden.

Die eigentliche Verwaltung der aufladbaren Telefonkarten findet nur im VASS statt. Im CASS sind die wiederaufladbaren Telefonkarten als gesperrt gekennzeichnet.

Des weiteren wird man in der Regel besondere Service-Telefonnummern vorsehen.

Zum Beispiel wird eine Hotline vorgesehen sein. Die Hotline liegt bei der wiederaufladbaren Telefonkarte bei EPM; da die SP keinen direkten Zugriff auf das System haben dürfen. Dem Anrufer stehen in der Regel drei Service-Rufnummern zur Verfügung:

### 1. Wiederaufladbare Telefonkarten-Servicenummer

Es handelt sich um ein automatisches Ansagesystem, der Anrufer wird wie beim VMS-System über Menüs geführt. Hier werden die folgenden Funktionen abgewickelt:
a) Änderung der Geheimzahl
b) Aufladung über Voucher

### 2. Guthabenabfrage

### Guthabenauskunft über Ansage (optional zusätzlich SMS)

Abgehenden Gesprächen von Anrufern, die über eine wiederaufladbare Telefonkarte verfügen, wird in der MSC (durch cpc = payphone) die gleiche Tarifklasse wie abgehende Gespräche von Sofort-Kunden zugeordnet (zum Beispiel TC = 62).

Durch die cpc = payphone werden abgehende Gespräche von Anrufern, die über eine wiederaufladbare Telefonkarte verfügen, zum VASS geleitet. Bei OCCF auf die Rufnummer 177 99 + GC-Rufnummer wird das Forwarding-Leg B (wiederaufladbare Telefonkarte) -C nicht zum VASS geleitet.

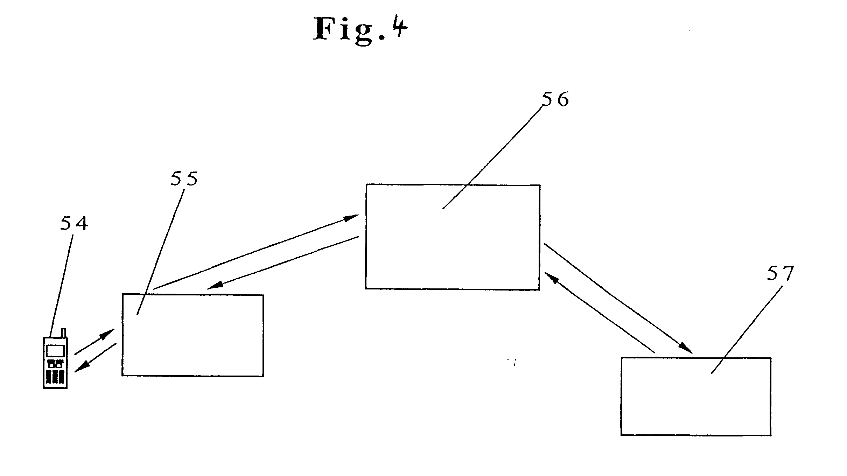

Durch das Setzen der Tariff Class = 62 ist gewährleistet, daß die entsprechenden MSC-CDRs durch das Rating herausgefiltert werden. Da das CASS diese Anrufer nicht kennt, würden anderenfalls Fehlermeldungen im CASS produziert werden. Die CDRs von Anrufern, die über eine wiederaufladbare Telefonkarte verfügen, werden in einer separaten Datei - unabhängig von CASS - gespeichert. Eine explizite Trennung von Anrufern, die über eine wiederaufladbare Telefonkarte verfügen, und Sofort!-Kunden, erfolgt in dieser Datei nicht. Eine Nachvollziehung kann nur über die MSISDN erfolgen (siehe Fig. 3).

Durch die cpc = payphone werden alle abgehenden Gespräche der Anrufer, die über eine wiederaufladbare Telefonkarte verfügen, von der MSC zum VASS geleitet. Die cpc wird im VASS von "payphone" nach "ordinary subscriber" zurückgesetzt. Das Gespräch wird zur MSC zurückgeleitet, der Gesprächsaufbau wird mit der neuen cpc fortgesetzt. Damit liegt die Gesprächskontrolle beim VASS.

### Voucherhandhabung

Die Verwaltung der Voucher findet im VASS statt. Sämtliche relevanten Daten zu Vouchern werden im VASS gespeichert und den involvierten Stellen (VU, CSC usw.) zur Verfügung gestellt.

Dies bezieht sich jedoch nur auf Daten, welche dem VASS bekannt sind. Beispielsweise Daten über am PoS getätigte Voucher-Verkäufe sind dem VASS nicht bekannt.

Dabei wird sichergestellt, daß die Daten aller im Umlauf gebrachten Voucher auch im VASS gespeichert sind. Um dies zu gewährleisten, wird eine Freigabe an den Händler (Distributer) der Voucher-Briefe nach erfolgreicher Eingabe der Daten ins VASS erteilt. Voucher-Briefe dürfen erst nach dieser Freigabe in den Umlauf gelangen. Die Voucher sind folgendermaßen gekennzeichnet:
- Voucher-ldentifikationsnummer
- Voucher-Sicherheitsnummer
- Wert
- Zugehöriger SP
Im VASS wird die gesamte Voucherhistorie erfaßt, nämlich:
- Voucher-ldentifikationsnummer
- Sicherheitsrelevante Daten zur Identifizierung der Voucher-Sicherheitsnummer
- Datum des Ersteintrags in das VASS
- Wert
- Zugehöriger SP
- Einlösedatum
- MSISDN, für welche die Aufladung (Einlösung) erfolgte
- Verfalldatum (wird vom Hersteller vergeben)
- Deaktivierungsdatum
- Operator ID, der eine Deaktivierung veranlaßt hat

### Voucher-Identifikationsnummer:

Diese Nummer dient zur Identifikation des Vouchers für administrative Abläufe (->Seriennummer). Bei der Generierung sind keine speziellen Sicherheitsalgorithmen zu beachten. Es muß nur sichergestellt werden, daß keine Doppeltvergabe der Nummern erfolgen kann. Die Voucher-ldentifikationsnummer ist im VASS gespeichert und zusätzlich von außen lesbar auf dem Voucher-Brief abgedruckt. Die Voucher-ldentifikationsnummer besteht aus xxx (z. B. dreizehn) Stellen.

### Voucher-Sicherheitsnummer:

Diese Nummer dient der eindeutigen Identifikation des Vouchers während des Aufladeprozesses. Die Voucher-Sicherheitsnummer selbst ist nicht im VASS gespeichert. Es wird ein Sicherheitsalgorithmus verwendet, der sicherstellt, daß das VASS die vom Anrufer eingegebene Sicherheitsnummer überprüfen kann. Hierzu werden je Voucher spezifische sicherheitsrelevante Daten gespeichert. Es wird sichergestellt, daß mit diesen sicherheitsrelevanten Daten, die zur Aufladung benötigte Voucher-Sicherheitsnummer von Unbefugten nur sehr schwer generiert werden kann. Die Voucher-Sicherheitsnummer ist von außen nicht lesbar in den Voucher-Brief eingelegt und besteht aus 16 Stellen.

### Datum des Ersteintrags:

Dies ist das Datum des ersten Eintrags des Vouchers in das VASS.

### Wert:

Wert des Vouchers (DM 50,-- oder DM 100,--).

### Zugehöriger SP:

Der Händler (Service Provider), über den der Voucher vertrieben wird.

### Verfallsdatum:

Die Einlösung eines Vouchers ist nur vor dem für diesen Voucher definierten Verfallsdatum möglich. Danach wird der Voucher als abgelaufen markiert. Nach xx Tagen wird der Voucher automatisch deaktiviert und dem Archivierungsprozeß zugeführt.

### Deaktivierungsdatum:

Dieses Datum gibt an, wann ein Voucher deaktiviert wurde. Dies kann bei abgelaufenen Vouchern automatisch erfolgen, aus bestimmten Gründen vom Operator per Kommando oder als Folge einer Überprüfung von zurückgegebenen Vouchern. Ein deaktivierter Voucher wird noch mindestens vier Monate im VASS gespeichert und danach archiviert.

### Folgende Daten müssen als ins VASS einlesbare Datei übermittelt werden:

- Voucher-Identifikationsnummer
- Wert
- Order Nummer (diese Nummer stellt einen Bezug zwischen Voucher und Lieferung her)
- Sicherheitsrelevante Daten zum Überprüfen der eingegebenen Voucher-Sicherheitsnummer
- Zugehöriger SP
- Verfallsdatum

### Schnittstelle zum Einlesen der Voucherdaten ins VASS:

Das Einlesen der Daten erfolgt über einen Datenträger (DAT-Tape) local am VASS. Es wird sichergestellt, daß unbeabsichtigte und absichtliche Änderungen der Daten auf dem Datenträger erkannt werden. Die Daten sind auf dem Datenträger verschlüsselt abgelegt.

Nach dem Einlesen der Daten wird eine Bestätigung vom VASS auf Papier erzeugt. Diese enthält folgende Daten:
- Name des Datenfiles
- Anzahl der eingelesenen Voucher
- Erste und letzte Voucher ID
- Einlesedatum mit Uhrzeit
- Login Name der Person, die Daten eingelesen hat
   Im VASS werden alle eingelesenen Voucher als aktiv eindeutig gekennzeichnet. Eingelöste Voucher werden als eingelöst gekennzeichnet und über einen Zeitraum von vier Monaten ab Einlösung im VASS gespeichert. Danach werden sie archiviert.

### Überprüfung der Echtheit eines Vouchers (Verlustbehaftet)

Werden aktive bzw. abgelaufene Voucher zurückgegeben, muß die Echtheit der Voucher überprüft werden. Hierzu wird die Voucher ID und die Voucher-Sicherheitsnummer von einem Operator über das AdC-Command Interface eingegeben. Nach Eingabe der Voucher-Sicherheitsnummer erfolgt im VASS eine sofortige Deaktivierung des Vouchers (der Voucher wird automatisch im VASS als deaktiviert gekennzeichnet). Werden beide Eingaben durch das VASS bestätigt, kann davon ausgegangen werden, daß der Voucher zum Zeitpunkt der Eingabe der Voucherdaten durch den Operator gültig war. Nach der Prüfung ist der nun geöffnete Voucher zu vernichten. Anfragen von bereits eingelösten bzw. deaktivierten Vouchern werden als Fehler zurückgewiesen.

### Archivierung

Alle Voucher, die mindestens vier Monate als eingelöst oder deaktiviert gekennzeichnet sind, werden archiviert und anschließend im VASS gelöscht.

### Telefonkarten-Application VASS

Das Guthaben eines Anrufers mit wiederaufladbarer Telefonkarte wird nach dem gültigen Tarifmodel im VASS in Echtzeit aktualisiert.

Ist das Guthaben aufgebraucht, wird das laufende Gespräch durch das VASS abgebrochen.

Der Anrufer wird beim nächsten Anrufaufbauversuch kostenlos auf eine Ansage geschaltet.

Die Gesprächskontrolle abgehender Gespräche von Anrufern mit wiederaufladbarer Telefonkarte liegt immer beim VASS, auch bei kostenfreien Rufnummern (Ausnahme: Notrufe).

Zeitüberwachungen, die Anzahl von erlaubten Eingabefehlern usw. werden im VASS als Systemparameter realisiert. Die im folgenden angegebenen Werte wurden zur Erhaltung der Lesbarkeit an das aktuelle Marketingkonzept angelehnt.

### VASS - Datenhaltung

Auszug der im VASS zu speichernden Daten:

### Teilnehmerdaten

- MSISDN - Eintrag bei Preaktivierung der Karte
- IMSI - Eintrag bei Preaktivierung der Karte
- Kundennummer (= der Kundennummer aus der Kundendatenbank)- Eintrag bei Preaktivierung der Karte
- Zuordnung zu SP - Eintrag bei Preaktivierung der Karte
- GC PIN (wird nach Kauf der Karte vom Anrufer eingegeben)
- PUK der SIM-Karte - Eintrag bei Preaktivierung der Karte
- Buchungskonto (Posting Account) zur Buchung folgender Daten:
   - Initial-Guthaben (bei Preaktivierung)
   - Aufladung durch Voucher (Voucher-ld steht im Buchungssatz)
   - Restguthaben bei Deaktivierung
   - Gebühr für Dienstleistungen (wie z. B. EGN)
   - und andere einbehaltene Gebühren
   - Aufsummierte Telefonzeit (Airtime)-Gebühren (diese Buchung erfolgt einmal im Monat und bei jeder Aufladung)
   - Stornierung von Buchungssätzen
- Konto zum Aufsummieren der Telefonzeit (Airtime)-Gebühren
   - (Summe der angefallenen Telefonzeit (Airtime)-Gebühren für einen Monat. Im Fall einer Aufladung erfolgt eine Buchung auf das Buchungskonto und ein Rücksetzen des Kontos für angefallene Gebühren auf 0)
- Aktuelles Guthaben (Kontostand des Buchungskontos minus Kontostand des Telefonzeit (Airtime)-Gebührenkontos - dient zur Kalkulation der verbleibenden Telefonzeit (Airtime))
- Gesamt-Telefonzeit (Airtime) pro Monat (Summe der vertelefonierten Telefonzeit (Airtime), geordnet nach Monaten, Zielrufnummern-Klassen und Zeitzonen. Gespeichert für vier Monate)
- Jahressumme Telefonzeit (Airtime) (Der Telefonzeit (Airtime)-Zähler wird für jedes Jahr aufsummiert.)
- Status der wiederaufladbaren Telefonkarte
- Gültiges Tarifmodell - Eintrag bei Preaktivierung der Karte
- Verfallsdatum der wiederaufladbaren Telefonkarte (wird mit erstem Gespräch oder mit Eingang des Verkaufsdatums im VASS gesetzt)
- CDRs (der letzten 80 Tage)
- Datum des ersten Anrufes (first call)
- Verkaufsdatum

### Voucherdaten

- Voucher-Identifikationsnummer
- Spezifische sicherheitsrelevante Voucher-Daten zur internen Überprüfung des Vouchers (es wird sichergestellt, daß mit diesen sicherheitsrelevanten Daten die zur Aufladung benötigte Voucher-Sicherheitsnummer von Unbefugten nur sehr schwer generiert werden kann)
- Wert
- SP
- Voucher-Status
- Einlesedatum
- Einlösungsdatum
- Verfallsdatum
- Operator ID (sollte ein Operator den Voucher deaktivieren)
- MSISDN (für welche der Voucher eingelöst wurde)

### SP-Daten

- Expiry Period (Wert der Zeitüberwachung bei Nichtnutzung der wiederaufladbaren Telefonkarte ab Erstanruf, Eintrag des Verkaufsdatums ins VASS, nach jedem weiteren gebührenpflichtigen abgehenden Gespräch, nach jeder Aufladung)
- No credit period (Wert der Zeitüberwachung bei Null-Guthaben)
- Credit Limit (oberes Guthabenlimit einer wiederaufladbaren Telefonkarte)
- High Spender Limit (zur Generierung von Daten für Marketingreports -> Mailingaktionen)
- Unteres Guthabenlimit für Erinnerungsanzeige (Reminder-Announcement)
- Unteres Guthabenlimit für Warnton

### Verfalldatum eines Vouchers (VoucherExpDate)

X Monate (z. B. vier Monate) nach dem Verfallsdatum eines Vouchers wird dieser Voucher deaktiviert, um ihn dem Archivierungsprozeß zuzuführen.

### Tägliche Zurückstellung auf Null (Daily Reset)

Jeden Tag zu einer bestimmten Zeit werden die Counter, die Fehleingaben für sicherheitsrelevante Daten (GC PIN, Voucher-Sicherheitsnummer, Kreditkartennummer) mitgezählt, auf Null zurückgesetzt.

### Ansagen

- f / cn -: fest eingestellte / konfigurierbare Ansage
- ct / s -: ununterbrochene/einmalige Ansagen
- i / n -: unterbrechbare / nicht unterbrechbare Ansagen (z. B. unterbrechbar durch DTMF-Töne)

**Phase 1:** Die Ansagen werden durch die IVR im VASS gehandelt.

**Phase 2 oder 3:** Die Ansagen werden durch die VANG in der MSC durchgeführt. Die Anzahl der zu speichernden Ansagen und Sprachfragmente in der VANG ist begrenzt.

**Folgende Tabellen werden archiviert:**
1. Subscriber Data
2. Posting Account
3. Voucher Data

### Voucher Data

Nach Benutzung oder Deaktivierung eines Vouchers wird der Status des Vouchers auf "benutzt" oder "deaktiviert" gesetzt. In diesem Stati bleibt der Voucher für mindestens vier Monate in der aktiven Datenbank.

### Archivierung

Monatlich wird ein Archivierungslauf gestartet, in dem
- Subscriber Daten, die länger als vier Monate im Status deaktiviert sind
- Posting Account Daten, die älter als vier Monate sind
- Voucher Daten, die länger als vier Monate im Status "benutzt" oder "deaktiviert" sind vom VASS auf ein DAT-Tape gespeichert und aus der aktiven Datenbank gelöscht werden.

Die DAT-Tapes mit den archivierten Daten werden zehn Jahre gelagert.

### Aufladeprozesse

Eine Aufladung der Karte kann in folgenden Zuständen erfolgen (wenn das Guthaben durch die Aufladung z. B. DM 200,-- nicht übersteigt):
- aktiv
- Guthaben niedrig (CreditLow)
- Kein Guthaben (NoCredit)

### Aufladung durch Voucher (Phase I - Fall Back Version)

Voraussetzung: Kauf eines Vouchers am PoS
1. Der Anrufer erwirbt am PoS einen Voucher mit fest zugewiesenem Guthaben (z. B. DM 50,-- oder DM 100,--).
2. Zur Aufladung wählt der Anrufer eine separate und kostenlose Rufnummer von seiner eigenen SIM-Karte an, wird zum VASS geschaltet und vom VASS anhand der CLI als "Green Card"-Kunde identifiziert. Der Anrufer wählt per DTMF in der obersten Servicemenüebene den Menüpunkt "Aufladen über Voucher".
3. Dem Anrufer wird durch eine kostenlose VASS-Ansage sein aktuelles Guthaben mitgeteilt.
4. Der Anrufer wird durch weitere VASS-Ansage aufgefordert, die Voucher-Sicherheitsnummer durch Tastenwahl (DTMF) einzugeben. Er muß die Voucher-Sicherheitsnummer nicht bestätigen.
5. Der Anrufer hat drei Versuche, eine gültige Voucher-Sicherheitsnummer einzugeben. Gelingt es dem Anrufer auch beim dritten Mal nicht, eine gültige Voucher-Sicherheitsnummer einzugeben, wird die Karte automatisch im VASS gesperrt und das Gespräch mit einer entsprechenden kostenlosen Ansage vom VASS abgebrochen.
6. Nach erfolgreicher Eingabe der Voucher-Sicherheitsnummer wird dem Anrufer durch eine kostenlose VASS-Ansage die Erhöhung des Guthabens mitgeteilt und das neue Guthaben angesagt.
7. Nach Einlösung des Vouchers wird der Voucher im VASS als eingelöst gekennzeichnet.
8. Tritt durch die aktuelle Aufladung eine Überschreitung des Guthabenlimits (DM 200,--) ein, findet die Aufladung nicht statt. Dem Anrufer wird durch eine kostenlose VASS-Ansage mitgeteilt, daß die Aufladung wegen Überschreitung des Limits nicht durchgeführt wurde und der Voucher weiterhin gültig bleibt. Zusätzlich wird ihm mitgeteilt, daß sich sein Kontostand durch die Aufladung nicht geändert hat.

### Vorgehen bei Gesprächsabbruch während der Aufladung:

- Bricht das Gespräch vor vollständiger Eingabe der Voucher-Sicherheitsnummer ab, gilt der Voucher im VASS weiterhin als noch nicht eingelöst.
- Bricht das Gespräch nach erfolgreicher Eingabe der Voucher-Sicherheitsnummer ab, gilt der Voucher (bei Eingabe einer gültigen Sicherheitsnummer) als eingelöst und wird im VASS der entsprechenden MSISDN zugeordnet. Wurde die Voucher-Sicherheitsnummer zum dritten Mal falsch eingegeben (d. h. es wurde die vollständige Anzahl an Stellen eingegeben, jedoch eine nicht gültige Voucher-Sicherheitsnummer), wird die Karte automatisch im VASS gesperrt.
- Wurde das Gespräch beendet, bevor der Anrufer die komplette Ansage abgehört hat, wird diese Ansage vor dem nächsten ausgehenden Gespräch (outgoing call) wiederholt.

### Voucherinformationen:

Der Operator erhält nach Eingabe der Voucher-ldentifikationsnummer mit einer technisch bedingten Verzögerung von 15- 30 Minuten Informationen zu einem Voucherstatus.

**Wichtig:** Der Operator darf aus Sicherheitsgründen nur die Identifikationsnummer des Vouchers eingeben (und möglichst auch sehen). Dies muß durch die entsprechende CSC-Maske abgefangen werden. Bei Eingabe einer Voucher-Sicherheitsnummer würde die sofortige Deaktivierung des Vouchers erfolgen.

Bei allen sicherheitsrelevanten Aktionen des CSC (außer beim Lesezugriff auf die Kundendatenbank) erfolgt ein Vermerk der Operator-Identifizierung im VASS.

### Physikalische Schnittstelle

### Mögliche Lösung:

- Filetransfer über ftp mit elektronischer Versiegelung

In den Zeichnungen ist die Erfindung beispielsweise veranschaulicht. Es zeigen:

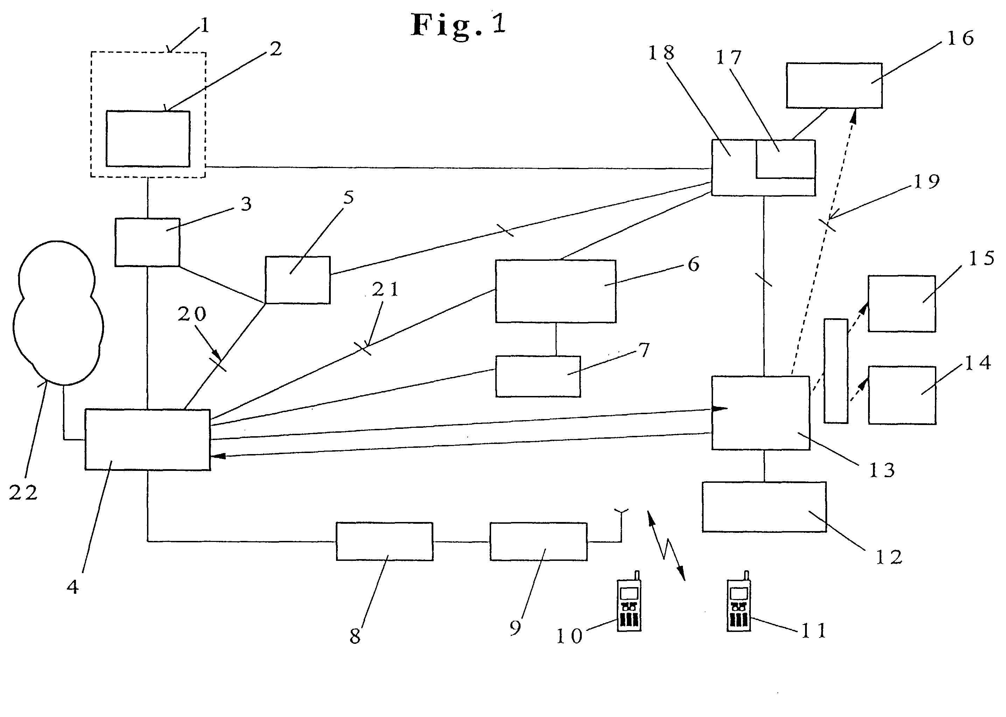

- Fig. 1: eine Netzübersicht;
- Fig. 2: den Gesprächsaufbau mittels einer VASS-Applikation für einen Gesprächsaufbau;
- Fig. 3: verschiedene Zustandsübergänge;
- Fig. 4: die Aufladung über Premium Rate Call bei einer ersten Realisierungsvariante und
- Fig. 5: eine zweite Realisierungsvariante.

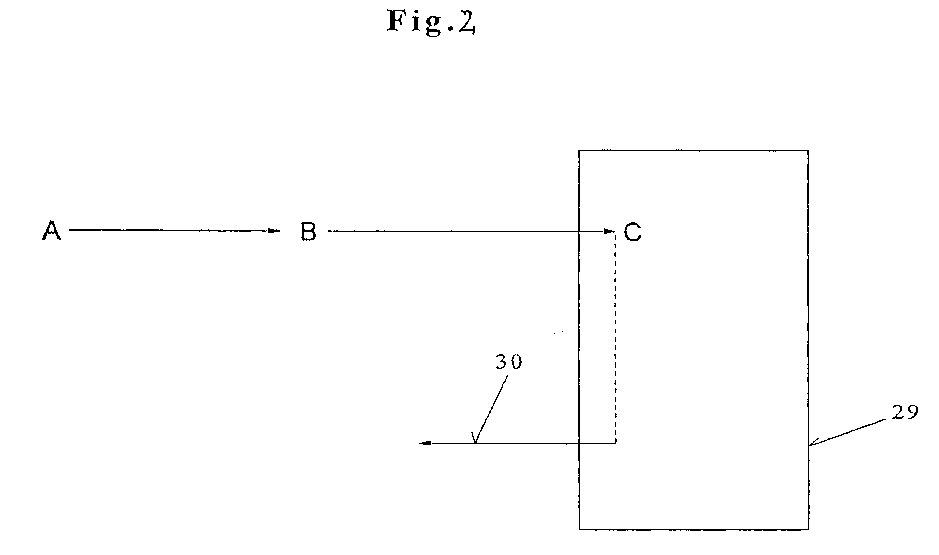

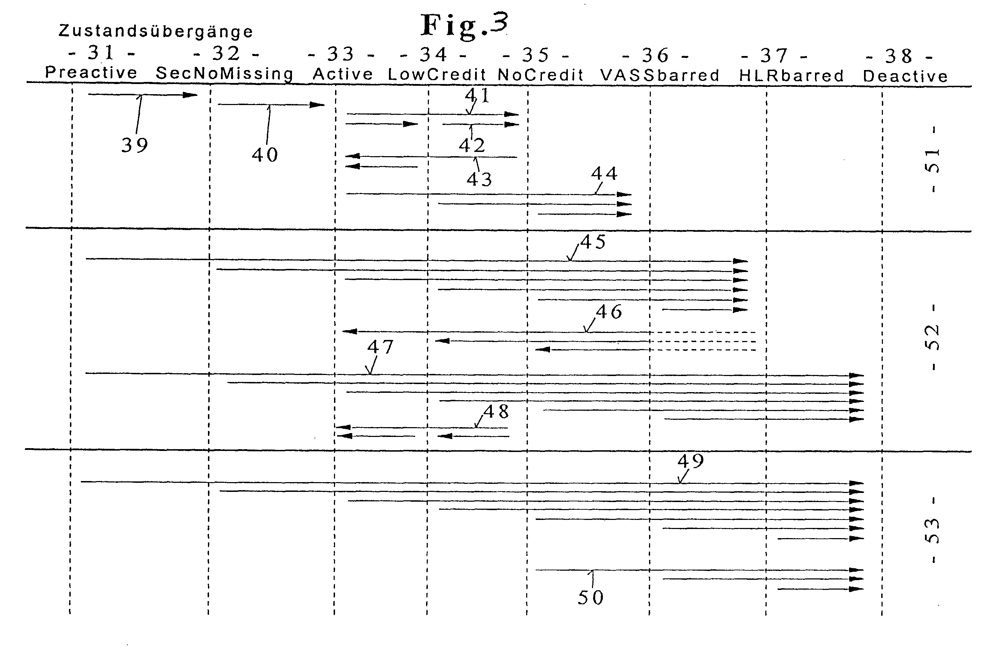

Fig. 2 zeigt die VASS-Applikation für den Gesprächsaufbau, wobei die Ziffern 177 für das von der Anmelderin betriebene Netz stehen.

Aus Fig. 3 sind sogenannte Zustandsübergänge ersichtlich:
- von: **preactive**
- nach: **SecNoMissing**
- Aktion: erstes abgehendes Gespräch
- von: **SecNoMissing**
- nach: **active**
- Aktion: erfolgreiche Eingabe der GC PIN

- von: **active**
- nach: **CreditLow, NoCredit, active**
- Aktion: abgehende gebührenpflichtige Gespräche oder Inanspruchnahme von zu vergebührenden Diensten

- von: **NoCredit, CreditLow, active**
- nach: **active**
- Aktion: Aufladung

- von: **Credit Low**
- nach: **Credit Low, NoCredit**
- Aktion: abgehende gebührenpflichtige Gespräche oder Inanspruchnahme von zu vergebührenden Diensten

- von: **NoCredit**
- nach: **active, CreditLow**
- von: **CreditLow**
- nach: **active, CreditLow**
- Aktion: Korrekturrating, Guthabenübertrag von einer anderen Karte

- von: **active, CreditLow, NoCredit**
- nach: **VASSBarred**
- Aktion: mehrmalige Falscheingaben von kritischen Daten (Sperrung erfolgt automatisch durch VASS Service Handling)

- von: **VASSBarred**
- nach: **active, CreditLow, NoCredit**
- Aktion: Entsperrung der Karte auf Anforderung des Operators

- von: **active, CreditLow, NoCredit, Preactive, SecNoMissing, VASSBarred**
- nach: **HLRBarred**
- Aktion: Sperrung der Karte auf Anforderung des Operators (z. B. nach Verlust der Karte)
- von: **HLRBarred**
- nach: **active, CreditLow, NoCredit, Preactive, SecNoMissing**
- Aktion: Entsperrung der Karte auf Anforderung des Operators
- von: **active, CreditLow, NoCredit, Preactive, SecNoMissing, VASSBarred, HLRBarred**
- nach: **deactive**
- Aktion: Deaktivierung der Karte auf Anforderung des Operators (z. B. in Verbindung mit der Aktivierung in ein normales Teilnehmerverhältnis) oder nach Ablauf der Zeitüberwachung (Nichtnutzung der Karte) oder nach Ablauf der Zeitüberwachung bei NoCredit

Die Aufladung einer Telefonkarte kann durch einen Anrufer mit einem normalen Teilnehmerverhältnis getätigt werden. Dieser normale Anrufer, der als "E-Plus-Kunde" in Übereinstimmung mit dem Namen der Anmelderin definiert wird, wählt eine spezielle Rufnummer. Eine erste Realisierungsvariante ist in Fig. 4 beschrieben.

Für eine mögliche Realisierung dieser Variante unter der Voraussetzung, daß keine Kundenbetreuer involviert werden sollen ("vollautomatische Lösung"), gibt es derzeit folgende Alternativen:
(1.1) Das VASS baut einen Anruf mit der CLl des zu belastenden Anrufers zu einer speziellen Servicenummer auf, welche nur über diesen Weg (via VASS) zu erreichen ist.
   Der Anruf läuft im ACD auf eine spezielle Servicenummer, welche so konfiguriert ist, daß lediglich eine dummy Ansage gespielt wird (Overflow bzw. Night transfer announcement).
(1.2) Das VASS baut einen Anruf mit der CLI des zu belastenden Anrufers zu einer speziellen Servicenummer auf, welche nur über diesen Weg (via VASS) zu erreichen ist.
   Der Anruf läuft im ACD auf eine spezielle Servicenummer, welche so konfiguriert ist, daß der Anruf in eine dummy Warteschlange geleitet wird (Queueing).

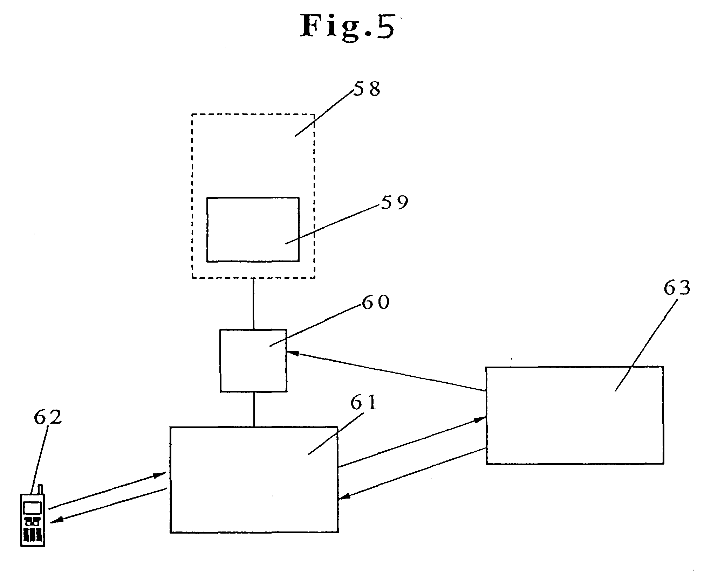

Die zweite Realisierungsvariante ist in Fig. 5 beschrieben. Hierbei erfolgt die Generierung von CDRs für den normalen E-Plus-Kunden im VASS, Anbindung des VASS an NIM, Transfer der VASS-CDRs zu CASS.

**Fig. 1:**
Mit dem Bezugszeichen 1 wurde das CASS bezeichnet, während 2 Rating NO darstellt. 3 ist ein NIM, 4 eine MSC, 5 ein HLR, 6 ein VMSC, 7 ein SMSC, 8 eine BSC und 9 ein BTS, während bei 10 und 11 jeweils ein Mobilfunkgerät mit wiederaufladbarer SIM-Karte dargestellt ist. Bei 12 ist ein Credit Card System dargestellt, während 13 ein VASS, 14 ein SAP, 15 ein MAIS, 16 eine CSC, 17 ein GC-WA, 18 ein AdC darstellen.
Es erfolgt eine Filterung der CDR's mit TC-62 und eine separate Abspeicherung.
Bei 19 ist ein E-Mail Interface und bei 20 bzw. 21 jeweils ein MAP angedeutet. Bei 22 ist in schematischer Darstellung ein Telekom-Netz.

In Fig. 2 ist eine Diensteplattform (VASS) mit dem Bezugszeichen 29 bezeichnet. Der Pfeil 30 geht zur Voicemailbox des Anrufers mit wiederaufladbarer Telefonkarte (= VMB des Teilnehmers B).

Fig. 3 zeigt die sogenannten Zustandsübergänge, und zwar bei 31 Preactive, 32 SecNoMissing, 33 Active, 34 LowCredit, 35 NoCredit, 36 VASSbarred, 37 HLRbarred, 38 Deactive.

Der Pfeil 39 bezeichnet 1stCallHandling, 40 SetNewSecNo, 41 Rating within Call, 42 Rating within Call, 43 Recharge (Voucher, CCard, etc.), 44 SetSubStateToBarred (e.g. fraudulent input), 45 Operator initiated GCHLR-barring (e.g. after theft or loss of card), 46 Operator initiated unbarring, 47 Operator initiated GC deactivation, 48 Credit entry, correction, 49 NoUsage expiry date exeeded, 50 NoCredit expiry date exeeded.

Bei 51 sind die sogenannten State transitions caused by the GC-call flow, bei 52 State transitions caused by operator actions (through AdC WA) und bei 53 State transitions caused by periodical processes on the VASS dargestellt.

**Fig. 4:**
Bei 54 ist wiederum ein Mobilfunkgerät bezeichnet, das mit der bei 55 angeordneten MSC und bei 56 mit dem VASS in Verbindung steht, das wiederum mit der bei 57 dargestellten ACD kooperiert. Der Ablauf ist somit wie folgt:
1) Leiten zum VASS aufgrund der Dialled Digits
2) Auswertung der CLI des A-Teilnehmers im VASS, Eingabe der GC MSISDN, Check der GC MSISDN im VASS
3) Aufbau eines neuen Rufs mit der CLI des normalen Tln. vom VASS zum ACD
4) Spielen einer Ansage, Erstellen eines ACD internen Call Tickets
5) Gutschrift bei GC-Teilnehmer
6) Auswertung des Call Tickets im CASS
7) Kennzeichnung der Aufladung auf der Rechnung des normalen Teilnehmers In Fig. 5 ist bei 58 ein CASS, bei 59 Rating NO, bei 60 NIM und bei 61 eine MSC dargestellt. 62 bezeichnet wiederum ein Mobilfunkgerät und 63 ein VASS.

Der Ablauf ist wie folgt:
1) Leiten zum VASS aufgrund der Dialled Digits
2) Auswertung der CLI des A-Teilnehmers im VASS, handelt es sich um einen normalen E-Plus-Kunden, dann Aufforderung zur Eingabe der GC MSISDN, Check der GC MSISDN im VASS
3) Erstellen eines CDRs für den normalen E-Plus Teilnehmer und Transfer dieses CDRs zum NIM
4) Entsprechende Gutschrift auf das Konto des angegebenen GC-Teilnehmers im VASS

### Bezugszeichenliste

- 1: CASS
- 2: Rating NO
- 3: NIM
- 4: MSC
- 5: HLR
- 6: VMSC
- 7: SMSC
- 8: BSC
- 9: BTS
- 10: Mobilfunkgerät
- 11: "
- 12: Credit Card System
- 13: VASS
- 14: SAP
- 15: MAIS
- 16: CSC
- 17: GC-WA
- 18: AdC
- 19: E-Mail Interface
- 20: MAP
- 21: "
- 22: Telekom-Netz
- 23: Rechteck, EPM
- 24: Anrufer
- 25: Kreditkartenprozessor
- 26: Pfeil
- 27: Leistung durch wiederaufladbare Telefonkarte
- 28: -
- 29: Diensteplattform (VASS)
- 30: Pfeil
- 31: Preactive
- 32: SecNoMissing
- 33: Active
- 34: LowCredit
- 35: NoCredit
- 36: VASSbarred
- 37: HLRbarred
- 38: Deactive
- 39: 1stCallHandling
- 40: SetNewSecNo
- 41: Rating within Call
- 42: " " "
- 43: Recharge (Voucher, CCard, etc.)
- 44: SetSubStateToBarred (e.g. fraudulent input)
- 45: Operator initiated GCHLR-barring (e.g. after theft or loss of card)
- 46: Operator initiated unbarring
- 47: Operator initiated GC deactivation
- 48: Credit entry, correction
- 49: NoUsage expiry date exeeded
- 50: NoCredit expiry date exeeded
- 51: State transitions caused by the GC-call flow
- 52: State transitions caused by operator actions (through AdC WA)
- 53: State transitions caused by periodical processes on the VASS
- 54: Mobilfunkgerät
- 55: MSC
- 56: VASS
- 57: ACD
- 58: CASS
- 59: Rating NO
- 60: NIM
- 61: MSC
- 62: Mobilfunkgerät
- 63: VASS

### Literaturverzeichnis

DE-OS 44 19 651

DE-OS 44 12 727

DE-OS 195 28 423

DE-OS 43 12 362

EP-OS 0 698 987

EP-OS 0 794 651

GB 2 215 897

WO 93/03571

| **Abkürzungsverzeichnis** | |
|---|---|
| AB | Anrufbeantworter |
| ACD | Automatic Call Distribution |
| A-CLI | |
| AdC | Administration Center |
| AdC-Command | |
| AdC-Command Interface | |
| av | average |
| BH | Busy Hour |
| BHCA | Busy Hour Call Attemps |
| BSC | Base Station Controller |
| BTS | Base Transceiver Station |
| Call record type | |
| Call Ticket | |
| CASS | Customer Administration and Services System |
| CC | Credit Card |
| CCard | Credit Card |
| | |
| Central Memory Tree Selection Analysis | |

| | |
|---|---|
| CF | Call Forwarding |
| CF-Leg | |
| CF-Fall | |
| CDR | Call Data Record |
| CLI | Calling Line Identity |
| CLIP | Calling Line Identification Presantation |
| CLIR | Calling Line Identification Restriction |
| cpc | calling party category |
| cpc ordinary | |
| Credit Card System | Kreditkartensystem |
| CSC | Customer Service Center |
| DAT-Tape | Digital Audio Tape |
| DTMF | Dual Tone Multi Frequency |
| DTV | |
| dummy Ansage | |
| EGN | Einzelgesprächsnachweis |
| EoY | End of Year |
| E-Plus Subscription | |
| EPM | E-Plus Mobilfunk |
| EPS | E-Plus Service |
| Erl | Erlang |
| ExpDate | Expiry Date |
| Forwarding indicators | |
| Forwarding-Leg B-C | |

| | |
|---|---|
| Fraud | |
| ftam | file transfer access and management |
| ftp | file transfer protocol |
| | |
| GC | Green Card =Wiederaufladbare Telefonkarte Eigenname |
| GC-WA | Green Card - Workaround |
| GICC | German ISO-8583 Credit Card |
| GSM | Group Special Mobile |
| GZS | Gesellschaft für Zahlungssysteme |
| HLR | Home Location Register |
| HLR barred | |
| Hotline | |
| HP01 | Rechner für Applikation Workaround |
| ID | Identification |
| IMSI | International Mobile Subscriber Identity |
| IN | Intelligent Network |
| IP | Intelligent Peripheral |
| ISDN | |
| IVR | Interactive Voice Response |
| LAN | Local Area Network |
| MAIS | Marketing Informationssystem |
| MAP | Mobile Application Part |
| MO | Mobile Originated |
| MOC | Mobile Originated Call |

| | |
|---|---|
| MSC | Mobile Switching Center |
| MSC-CDR | |
| MSISDN | Mobile Subscriber ISDN |
| MTC | |
| NIM | Network Interface Manager |
| NO | Network Operator |
| OCCF | Operator Controlled Call Forwarding |
| Offset | |
| OMC | Operation and Maintenance Center |
| OMC-LAN | |
| Ordinary subscriber | |
| | |
| overflow bzw. night transfer announcement | |
| | |
| Payphone | |
| pcs | pieces |
| PIN | Personal Identification Number |
| PLZ | Postleitzahl |
| PoS | Point of Sale |
| Posting date | |
| Premium Rate Number | |
| PSTN | Public Switched Telephone Network |

| | |
|---|---|
| PUK | Personal Unblocking Key (associated to the SIM card) |
| Qbos | |
| Queueing | |
| SAP | Standard Applikations Programm |
| sec | second |
| SecNo | Security Number |
| SIM | Subscriber Identity Module |
| SMS | |
| SMSC | Short Message Service Center |
| SMT | Short Message Terminated |
| SP | Service Provider |
| SS7 | Signalling System No. 7 |
| Spec. | Specification |
| Subscriber data | |
| SubState | Subscription State |
| tbd | |
| TC | Tariff Class |
| TC = 62 | |
| | |
| TCP/IP | Transmission Control Protocol /Internet Protocol |
| | |
| Timeguard | |
| TM | Tariff Model |
| TN, Tln. | Teilnehmer |

| | |
|---|---|
| VANG | Verbal Announcement Generator |
| VASS | Value Added Services System |
| VASS barred | |
| WA | Workaround (of the AdC) |
| VMB | Voicemail Box |
| VMS | Voicemail System |
| VMSC | Voicemail Service Center |
| Voucher | |
| Voucher data | |
| VU | Vertriebsunterstützung (Abteilung) |
| WA | Workaround |
| 17799 + GC-Rufnummer | |

## Patentansprüche

1. Verfahren zum Aufladen einer Telefonkarte durch Voucher für ein Mobilfunkgerät in einem Mobilfunknetz, welches eine Diensteplattform VASS aufweist, wobei bei dem Verfahren die Telefonkarte nicht selbst, sondern indirekt nur im Netz mit einem flexiblen Wertbetrag aufgeladen wird, wobei
a) über eine kostenlose Rufnummer eine Verbindung zum VASS erfolgt;
b) im VASS die Identifikation des Anrufers über seine MSISDN (CLI) erfolgt;
c) das VASS dem Anrufer ein Menü ansagt und anschließend die Menüauswahl des Anrufers für die "Voucher-Aufladung" über DTMF empfängt;
d) das VASS über DTMF eine Voucher-Sicherheitsnummer empfängt, wobei, wenn die Verbindung vor vollständigem Empfang der Voucher-Sicherheitsnummer abbricht, der Voucher im VASS weiterhin als nicht eingelöst gilt, während, wenn die Verbindung nach vollständigem Empfang der Voucher-Sicherheitsnummer abbricht, das VASS die Aufladung trotzdem durchführt;
e) das VASS den Voucher mit Hilfe der empfangenen Voucher-Sicherheitsnummer identifiziert, wobei die Voucher-Sicherheitsnummer selbst nicht im VASS gespeichert ist und das VASS durch einen Sicherheitsalgorithmus die eingegebene Voucher-Sicherheitsnummer mittels je Voucher, im VASS gespeicherter, spezifischer sicherheitsrelevanter Daten überprüft;
f) bei Überschreitung eines Guthabenlimits durch die Aufladung das VASS diese zurückweist;
g) nach erfolgreicher Überprüfung der Voucher-Sicherheitsnummer im VASS der Voucher als eingelöst gekennzeichnet und die Aufladung des Guthabens durchgeführt wird;
h) das VASS vor Beendigung der Verbindung ansagt, ob die Aufladung erfolgreich war oder nicht sowie das neue Guthaben der wiederaufladbaren Telefonkarte ansagt;
i), falls die Verbindung beendet wurde, bevor das VASS die komplette Ansage abgespielt hat, wird diese Ansage vom VASS bei dem nächsten abgehenden Gespräch wiederholt;
j) die Verwaltung aller Voucher im VASS vorgenommen wird, und daß je Voucher folgende voucherrelevanten Daten gespeichert werden:
- Voucher-ldentifikationsnummer
- sicherheitsrelevante Daten zur Identifizierung der Voucher-Sicherheitsnummer
- Datum des Ersteintrags im VASS
- Wert des Vouchers
- zugehöriger Serviceprovider
- Datum der Vouchereinlösung
- MSISDN, für welche die Aufladung erfolgte
- Verfalldatum des Vouchers
- Deaktivierungsdatum
- Operator ID, der eine Deaktivierung veranlaßt hat;
k) im VASS alle Voucher eindeutig als aktiv kennzeichnet und eingelöste Voucher ebenfalls eindeutig als eingelöst gekennzeichnet und für einen bestimmten Zeitraum in dem VASS gespeichert und danach archiviert werden.

## Claims

1. Method for recharging by voucher a telephone card for a mobile telephone set in a mobile telephone network, which network has a VASS service platform, whereby according to the method the telephone card is not recharged direct but indirect in the network only and with a variable amount, whereby
a) a connection is made to the VASS via a charge-free telephone number;
b) the caller is identified in the VASS via his MSISDN (CLI);
c) the VASS offers the caller a menu and then receives the caller's menu selection for "recharging by voucher" via DTMF;
d) the VASS receives via DTMF a voucher security number whereby, if the connection is broken before the full voucher security number has been received, the voucher in the VASS is then treated as not debited, but, if the connection is broken after the full voucher security number has been received, the VASS continues with the recharge;
e) the VASS identifies the voucher with the aid of the received voucher security number, whereby the voucher security number itself is not stored in the VASS and the VASS checks the entered voucher security number via a security algorithm and by means of specific security-related data stored in the VASS for each voucher;
f) if the recharge exceeds a credit limit the VASS refuses the recharge;
g) after the voucher security number is accepted in the VASS, the voucher is identified as debited and the voucher amount credited to the card;
h) the VASS states before the connection is terminated whether the recharge was been carried out or not and indicates the amount with which the rechargeable telephone card has been credited;
i) if the connection has been terminated before the VASS has delivered the complete message, the message is repeated by the VASS when the next outgoing call is made;
j) all vouchers are administered in the VASS, and that for each voucher the following voucher-related data are stored:
- voucher identification number
- security-related data for identifying the voucher security number
- date of initial entry in the VASS
- value of the voucher
- associated service provider
- date of voucher debiting
- MSISDN, for which the charge was effected
- expiry date of the voucher
- date of deactivation
- ID of operator who authorised a deactivation;
k) in the VASS all vouchers are clearly identified as active, and whereby debited vouchers are likewise clearly identified as debited and stored for a specified period in the VASS and afterwards placed in the archives.

## Revendications

1. Procédé pour recharger une carte téléphonique par une carte justificative pour un téléphone mobile dans un réseau de radiocommunications mobiles, comportant une plate-forme de service VASS, dans lequel la carte téléphonique n'est pas rechargée elle-même, mais uniquement rechargée indirectement dans le réseau par un montant flexible, et dans lequel
a) une communication est établie avec le VASS par l'intermédiaire d'un numéro d'appel gratuit
b) l'identification de l'auteur de l'appel est réalisée dans le VASS par une MSISDN (CLI);
c) le VASS indique à l'auteur de l'appel un menu avant de recevoir le menu sélectionné par l'auteur de l'appel pour le "rechargement de la carte justificative" par DTMF;
d) le VASS reçoit par DTMF un numéro de sécurité de la carte justificative, la carte justificative étant toujours considérée comme non encaissée lors d'une interruption de la communication avant la réception complète du numéro de sécurité de la carte justificative, le VASS assurant toutefois le rechargement en cas d'une interruption après la réception complète du numéro de sécurité de la carte justificative;
e) le VASS identifie la carte justificative par l'intermédiaire du numéro de sécurité de la carte justificative reçu, le numéro de sécurité de la carte justificative n'étant pas lui-même enregistré dans le VASS, le VASS contrôlant par l'intermédiaire d'un algorithme de sécurité le numéro de sécurité de la carte justificative rentré sur la base de données spécifiques concernant la sécurité enregistrées pour chaque carte justificative dans le VASS;
f) le VASS refuse le rechargement en cas de dépassement d'une limite de crédit;
g) la carte justificative est caractérisée comme étant encaissée après un contrôle réussi du numéro de sécurité de la carte justificative dans le VASS, le rechargement du crédit étant effectué;
h) le VASS indique avant la fin de la communication si le rechargement a été effectué avec succès ou non ainsi que le nouveau crédit de la carte téléphonique rechargeable;
i) en cas d'un achèvement de la communication avant la retransmission de l'ensemble des indications par le VASS, le VASS répète ces indications lors du prochain appel sortant;
j) l'administration de toutes les cartes justificatives est réalisée dans le VASS, les données suivantes concernant la carte justificative étant enregistrées pour chaque carte justificative:
- numéro d'identification de la carte justificative
- données concernant la securité servant à l'identification du numéro de sécurité de la carte justificative
- le date de la première inscription dans le VASS
- la montant du crédit de la carte justificative
- le prestataire de services correspondant
- la date de l'encaissement de la carte justificative
- le MSISDN pour lequel le rechargement a été effectué
- la date d'expiration de la carte justificative
- la date de désactivation de la carte justificative
- l'opérateur ID ayant causé une désactivation;
k) toutes les cartes justificatives sont caractérisées de façon non équivoque comme actives et toutes les cartes justificatives encaissées étant également caractérisées de manière non équivoque comme encaissées dans le VASS, avant un enregistrement dans le VASS pendant une période de temps prédéterminée et un archivage.
